# EUROPÄISCHE PATENTANMELDUNG

(11) **EP 1 531 429 A1**
(43) Veröffentlichungstag der Anmeldung: **18.05.2005**
(21) Anmeldenummer: 04026117.4
(22) Anmeldetag: 04.11.2004
(51) Int. Cl.: G07C 1/30, B60R 22/32, B25B 27/00

(54) **Vorrichtung zur Einstellung der Parkzeit**

(30) Priorität: 04.11.2003 DE 10351480
(71) Anmelder: Kurt Koch, 63739 Aschaffenburg (DE)
(72) Erfinder: Kurt Koch, 63739 Aschaffenburg (DE)
(74) Vertreter: Stippl, Hubert, Dipl.-Ing.

(57) **Zusammenfassung**

Die Erfindung betrifft eine Vorrichtung zur Einstellung der Parkzeit mit einem Gehäuse 2, das eine Vorder- 3 und eine Rückwand 4 aufweist, zwischen denen eine mit den Stunden des Tages versehene Scheibe 5 drehbar angeordnet ist, wobei ein Bereich der Scheibe 5 durch ein Fenster 6 in der Vorderwand 3 sichtbar ist, wobei die Vorrichtung 1 ein Schneidewerkzeug aufweist.

## Beschreibung

Die vorliegende Erfindung betrifft eine Vorrichtung zur Einstellung der Parkzeit mit den weiteren Merkmalen des Oberbegriffes des Anspruchs 1.

Die bereits bekannten Vorrichtungen zur Einstellung der Parkzeit, sogenannte Parkscheiben, bestehen aus einem Gehäuse, das eine Vorder- und eine Rückwand aufweist, zwischen denen eine mit den Stunden des Tages versehene Scheibe (sogenannte Zeitscheibe) drehbar angeordnet ist, wobei ein Bereich der Zeitscheibe durch ein Fenster in den Vordergrund sichtbar ist. Solche Parkscheiben bestehen meist aus Kunststoff, die einfacheren Ausführungsvarianten dagegen aus Pappe.

Die Aufgabe der vorliegenden Erfindung besteht darin, eine Vorrichtung gemäß dem Oberbegriff des Patentanspruchs 1 derart weiterzubilden, dass die Vorrichtung hinsichtlich ihres Funktions- sowie Einsatzbereiches erweitert wird.

Diese Aufgabe wird durch die gesamte Lehre des Patentanspruchs 1 gelöst. Vorteilhafte Weiterbildungen der Erfindung ergeben sich aus den Unteransprüchen 2 bis 22.

Erfindungsgemäß weist die Vorrichtung zur Einstellung der Parkzeit ein Schneidewerkzeug auf, welches insbesondere im Notfall eine schnelle Hilfe sein kann. Durch die Integration des Schneidewerkzeugs in die Parkscheibe ist das Schneidewerkzeug auch sofort zugänglich, da die Parkscheibe üblicherweise an einem Ort (z. B. im Handschuhfach, in einem Türfach oder dergleichen) aufbewahrt wird, wo sie sofort griffbereit ist.

Als Schneidewerkzeug kann ein Gurtschneider vorgesehen sein, mit welchem der Sicherheitsgurt - falls sich dieser verhakt hat - im Falle eines Unfalls zerschnitten werden kann. Ebenso kann damit auch der Stoff einer Kleidung z. B. bei einer Verletzung zerschnitten werden. Die Parkscheibe selbst bietet zudem eine große Angriffsfläche, um die notwendige Kraft auf den Gurtschneider zum Zerschneiden des Sicherheitsgurtes aufzubringen. Ein weiterer Vorteil der Anordnung eines Gurtschneiders an einer Parkscheibe besteht darin, dass sich der Autofahrer selbst in einer Notsituation zumindest an den Aufbewahrungsort der häufiger benutzten Parkscheibe erinnern kann und mit der Parkscheibe gleichzeitig die rettende Maßnahme ergreifen kann.

Der Gurtschneider kann zwischen der Rückwand und einer darauf positionierten Deckplatte angeordnet sein und ist auf diese Weise sicher mit der Parkscheibe verbunden.

Vorteilhafterweise kann die Schneide des Schneidewerkzeugs in einer randseitigen Ausnehmung des Gehäuses angeordnet sein. Insbesondere kann die Schneide von der Außenkante des Gehäuses zurückversetzt sein, so dass die Schneide kein Verletzungsrisiko darstellt. Insbesondere kann dabei die Ausnehmung eine Breite von ca. 8 mm aufweisen, um auch eine Verletzungsgefahr der Finger auszuschließen.

Die Schneide kann in einem Eckbereich der Vorrichtung bzw. der Parkscheibe angeordnet sein, so dass mit der restlichen Parkscheibe ein entsprechend großer Hebel bzw. eine entsprechend große Angriffsfläche zur Verfügung steht. Außerdem erweist sich die Parkscheibe mit der im Eckbereich angeordneten Schneide als besonders handhabbar.

Mit Vorteil kann insbesondere der an die Schneide angrenzende Bereich des Gehäuses abgerundet sein, damit sowohl bei der üblichen Benutzung der Parkscheibe als auch beim Schneidevorgang keine Verletzungsgefahr durch scharfkantige Bereiche besteht.

Vor allem, wenn die Schneide in einem Eckbereich der Parkscheibe angeordnet ist, kann der zumindest auf einer Seite der Schneide angrenzende Bereich des Gehäuses als Vorsprung ausgebildet sein. Dieser Vorsprung ist zweckmäßigerweise abgerundet. Der Vorsprung stellt vor allem beim Schneidevorgang eine gute Angriffsfläche z. B. für den Zeigefinger dar.

Mit besonderem Vorteil kann an der Vorrichtung ein Hammer zum Zerschlagen einer Scheibe vorgesehen sein. Bei einem Unfall können sich die Fahrzeuginsassen zunächst selbst helfen, indem sie mittels des Hammers eine Scheibe zerschlagen, so dass zumindest ein Luftaustausch stattfinden kann. Zweckmäßigerweise kann nur der Hammerkopf an der Parkscheibe angebracht sein, wobei die Parkscheibe selbst als Hammergriff sowie notwendiger Hebel dient.

Der Hammer kann zum Beispiel in der Nähe des Schneidewerkzeugs vorgesehen sein und auf dem oben beschriebenen Vorsprung angeordnet sein. Vorteilhafterweise kann der Hammer auf den Vorsprung aufsteckbar sein oder ist auf diesem fest angeordnet. Um ein Zerschlagen einer Autoglasscheibe mit dem Hammer auch sicherzustellen, kann zumindest der vordere Bereich des Hammers aus Hartmetall bestehen.

Zusätzlich kann die Vorrichtung zur Einstellung der Parkzeit auch als Münzen- und/oder Parkchipsaufbewahrungsvorrichtung dienen, wenn in der Rückwand mindestens eine Aufnahme für Münzen und/oder Parkchips vorgesehen ist. Als Parkchips sind dabei die Chips bezeichnet, die für das Einkaufswagenordnungssystem benutzt werden. Da oftmals auch Münzen z. B. für den Parkautomat benötigt werden, ist diese Zusatzfunktion der Parkscheibe äußerst zweckmäßig.

Die Aufnahmen können als Ausnehmungen oder Öffnungen der Rückwand ausgebildet sein. Die Rückwand muß demnach eine entsprechende Stärke aufweisen, wodurch die gesamte Parkscheibe äußerst stabil wird. Vorteilhafterweise können die Aufnahmen solche Abmessungen, insbesondere eine solche Breite aufweisen, dass in die jeweiligen Aufnahmen eine Mehrzahl von Münzen eines bestimmten Durchmessers einbringbar ist. Beispielsweise ist eine Aufnahme nur für 20-Cent-Münzen, eine weitere Aufnahme nur für 50-Cent-Münzen usw. geeignet. Diese Aufnahmen ermöglichen demnach eine übersichtliche Einordnung der Münzen und gewährleisten damit auch einen guten Überblick über die Zahl und Art der aufbewahrten Münzen.

Um ein Herausfallen der Münzen oder Parkchips zu vermeiden, können die Aufnahmen Mittel zum Halt der in sie eingebrachten Münzen oder Parkchips aufweisen.

Als Haltemittel können Vorsprünge vorgesehen sein, welche die eingebrachten Münzen oder Chips übergreifen. Beispielsweise können im Bereich der Öffnung federelastische Vorsprünge angeordnet sein, die sowohl ein Einschieben als auch eine Herausnahme der Münzen gewährleisten und gleichzeitig ein unerwünschtes Herausfallen verhindern. Zusätzlich oder alternativ können auch Vorsprünge vorgesehen sein, die sich zumindest randseitig im wesentlichen über die gesamte Länge der Aufnahmen erstrecken und die Münzen oder Chips zumindest randseitig übergreifen, falls auf der Rückwand keine Deckplatte vorgesehen ist.

Zweckmäßigerweise können die Aufnahmen langgestreckt ausgebildet sein, um eine Mehrzahl von Münzen und/oder Parkchips aufzunehmen.

Um den zur Verfügung stehenden Platz möglichst optimal auszunutzen, können die einzelnen Aufnahmen parallel zueinander angeordnet sein. Diese Anordnung der Aufnahmen ist zudem für den bereits oben beschriebenen besseren Überblick der aufgenommenen Münzen von Vorteil.

Die Aufnahmen können sich im wesentlichen über die gesamte Länge und/oder Breite der Rückwand erstrecken, um möglichst die gesamte rückseitige Fläche auszunutzen.

Die Aufnahmen können offen sein, so dass die Anzahl der darin befindlichen Münzen sofort gesehen werden kann. Die offene Ausbildung hat auch den Vorteil, dass die Münzen von oben nach unten herausgeschoben werden können.

Es besteht aber auch die Möglichkeit, dass die Aufnahmen zumindest bereichsweise von einer Deckplatte abgedeckt sind. Die Deckplatte stellt einen Schutz der eingelegten Münzen oder Parkchips vor dem Herausfallen dar und sorgt gleichzeitig dafür, dass die Aufnahmen nicht verschmutzt werden. Außerdem kann die Deckplatte als Werbefläche genutzt werden.

Die Deckplatte kann transparent oder teiltransparent ausgebildet sein, um die Anzahl der in den Aufnahmen angeordneten Münzen und/oder Parkchips sehen zu können. Die Entnahme der Parkchips ist auch bei der Ausführungsvariante mit der Deckplatte ohne weiteres möglich, da die Münzen oder Parkchips durch die Schwerkraft nach unten in Richtung Öffnung rutschen.

Die Parkscheibe kann in ihren Seiten- bzw. Kantenbereichen einen Eis- und/oder Reifkratzbereich aufweisen. Zusätzlich oder alternativ kann auf einer Seite eine Wischlippe vorgesehen sein.

Vorteilhafterweise kann die Vorrichtung an einem Kantenbereich auch ein Metermaß oder ein Lineal aufweisen, welches zum Beispiel zum Lesen einer Straßenkarte von Vorteil ist.

Die Erfindung ist anhand von vorteilhaften Ausführungsbeispielen in den Zeichnungsfiguren näher erläutert. Diese zeigen:
- Fig.1: eine Vorderansicht auf eine Ausführungsform der erfindungsgemäßen Vorrichtung (Parkscheibe) mit einer Detailansicht;
- Fig. 2: eine Vorderansicht auf eine weitere Ausführungsvariante der Parkscheibe;
- Fig. 3: eine Rückansicht der Parkscheibe gemäß Fig. 1 oder 2 ohne Deckplatte;
- Fig. 4: eine Rückansicht der Parkscheibe gemäß Fig. 1 oder 2 mit transparenter Deckplatte;
- Fig. 5: eine Rückansicht der Parkscheibe gemäß Fig. 1 oder 2 mit nicht transparenter Deckplatte;
- Fig. 6: einen Querschnitt durch die Parkscheibe entlang der Linie VI-VI in Fig. 3;
- Fig. 7: eine Vorderansicht auf eine Parkscheibe gemäß Fig. 1 mit aufgestecktem Hammer sowie eine Detailansicht.

Bezugsziffer 1 bezeichnet die Vorrichtung zur Einstellung der Parkzeit in ihrer Gesamtheit. Die Vorrichtung besteht aus einem Gehäuse 2, das eine Vorder- 3 und Rückwand 4 aufweist, zwischen denen eine mit den Stunden des Tages versehene Scheibe 5, eine sogenannte Zeitscheibe, angeordnet ist. Ein Bereich der Scheibe 5 ist durch ein Fenster 6 in der Vorderwand 3 sichtbar. Die Vorrichtung 1 weist außerdem ein Schneidewerkzeug, nämlich einen Gurtschneider 7, auf. Im Notfall kann ein verhakter bzw. eingeklemmter Gurt oder auch Kleidung z. B. bei einer Verletzung mittels des an der Parkscheibe angeordneten Gurtschneiders 7 rasch durchtrennt werden. Da der Fahrer den Aufbewahrungsort der Parkscheibe aufgrund der mehrfachen Benutzung kennt, zögert er auch im Notfall nicht, um den an der Parkscheibe integrierten Gurtschneider 7 zu ergreifen.

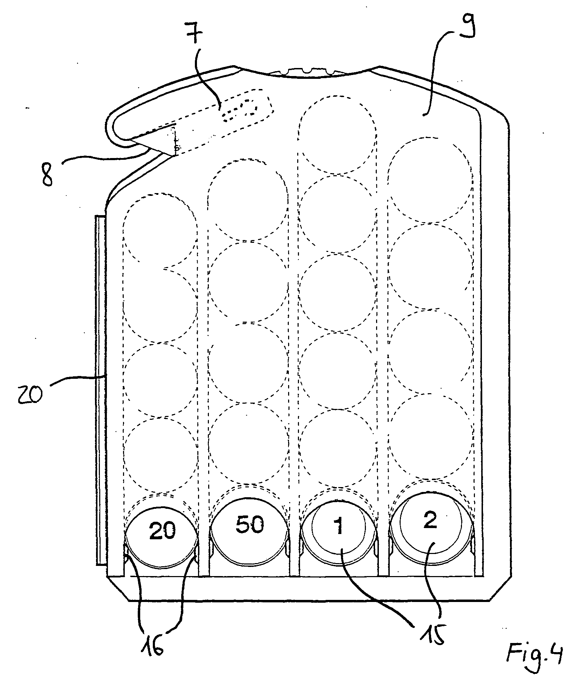

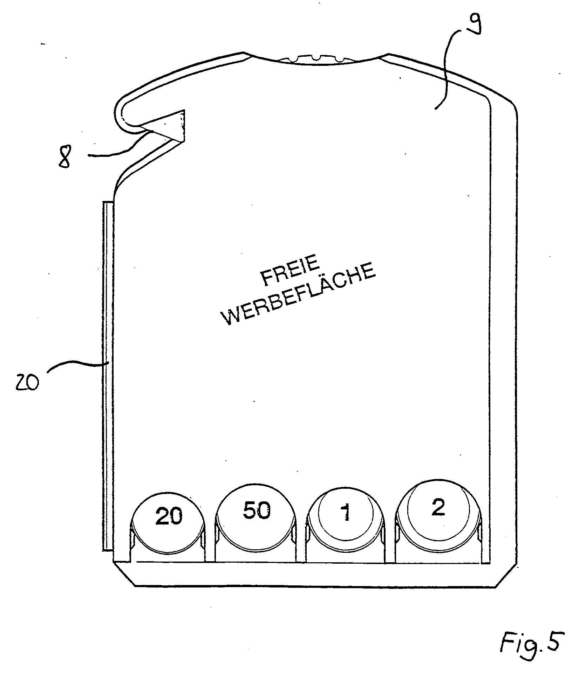

Der Gurtschneider 7 ist zwischen der Rückwand 4 und einer darauf befindlichen Deckplatte 9 so angeordnet, dass lediglich die Schneide 8 offen liegt. Der Gurtschneider 7 ist somit sicher zwischen Rückwand 4 und Deckplatte 9 gehalten (siehe Fig. 4 und 5) und vor der Entnahme zum Beispiel durch Kinder geschützt.

Die Schneide 8 des Gurtschneiders 7 ist in einer randseitigen Ausnehmung 10 des Gehäuses 2 angeordnet. Dabei ist die Schneide 8 von der Außenkante 11 des Gehäuses 2 zurückversetzt und steht damit nicht frei nach außen ab. Ein Verletzungsrisiko wird somit ausgeschlossen. Die Ausnehmung 10 ist gerade so breit, dass ein Gurt oder der Stoff einer Kleidung bis zur Schneide 8 eingeschoben werden kann und zerschneidbar ist.

Die Schneide 8 ist in einem Eckbereich der Vorrichtung 1 angeordnet, so dass die Betätigung der drehbaren Scheibe 5 nicht behindert wird. Zudem ist die Betätigung der Schneide 8 im Eckbereich der Vorrichtung 1 einfach durchführbar.

Der an die Schneide 8 angrenzende Bereich des Gehäuses 2 ist abgerundet, damit sowohl bei der üblichen Benutzung der Parkscheibe als auch bei der Betätigung des Gurtschneiders 7 keine Verletzungsgefahr besteht. Der auf einer Seite der Schneide 8 angrenzende Bereich des Gehäuses 2 ist als abgerundeter Vorsprung 12 ausgebildet.

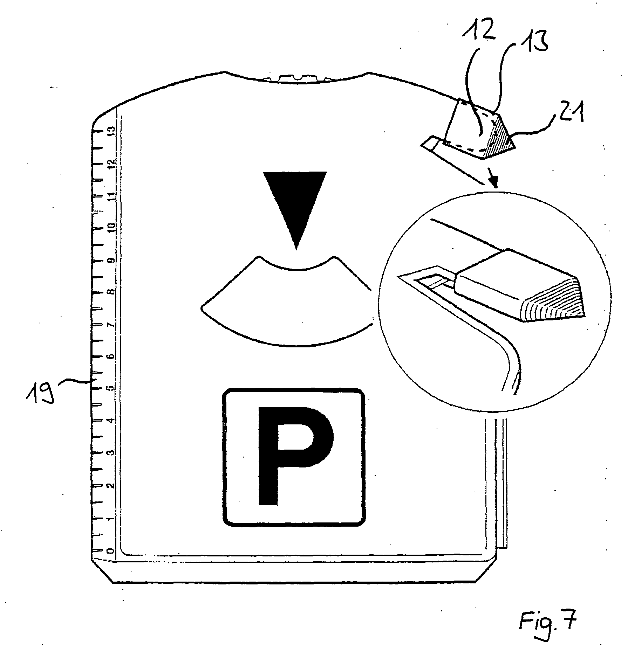

Um im Notfall eine Scheibe zerschlagen zu können, weist die Vorrichtung 1 gemäß Fig. 7 außerdem einen Hammer 13 auf. Der Hammer 13 ist auf den Vorsprung 12 aufgesteckt und mit diesem fest verbunden.

Um die Fensterscheibe mit nur einem geringen Kraftaufwand zerschlagen zu können, besteht der vordere Bereich bzw. die Spitze 21 des Hammers 13 aus Hartmetall.

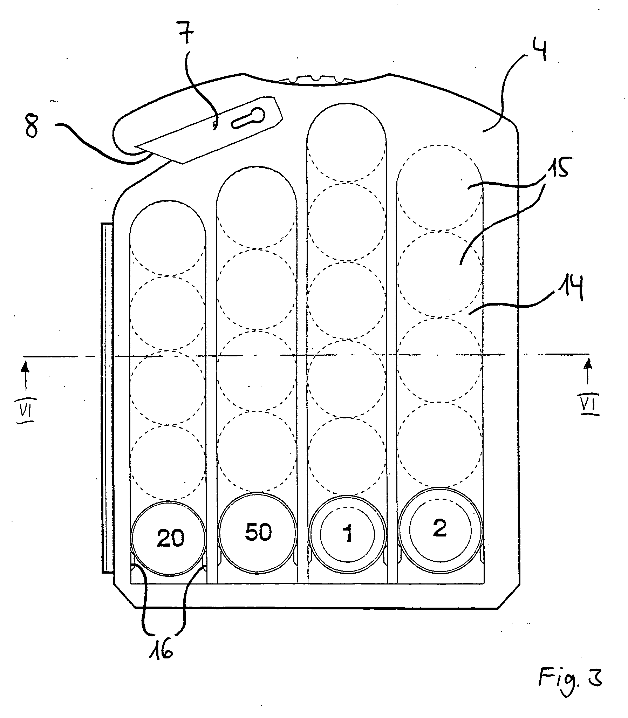

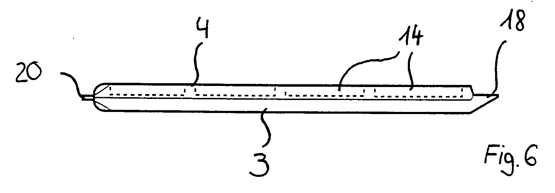

Wie aus den Figuren 3 bis 6 hervorgeht, sind in der Rückwand 4 des Gehäuses 2 Aufnahmen 14 für Münzen 15 und/oder Parkchips vorgesehen. Die Parkscheibe stellt demnach gleichzeitig eine zweckmäßige Münz- oder Parkchipaufbewahrungsvorrichtung dar.

Die Aufnahmen 14 sind als Ausnehmungen in der Rückwand 4 ausgebildet. In die jeweilige Aufnahme 14 ist eine Mehrzahl von Münzen 15 eines bestimmten Durchmessers einbringbar. Wie aus den Zeichnungsfiguren hervorgeht, unterscheiden sich die jeweiligen Aufnahmen 14 in ihrer Breite, so dass in sie jeweils nur Münzen 15 mit einem bestimmten Durchmesser und damit einem bestimmten Wert eingeschoben werden können. In den dargestellten Ausführungsbeispielen sind die Aufnahmen für 20-Cent-, 50-Cent-, 1-Euro- sowie 2-Euro-Münzen dimensioniert. Damit hält der Besitzer stets einen Überblick über die zur Verfügung stehenden Münzen.

Damit die Münzen 15 nicht herausfallen können, weisen die Aufnahmen 14 Mittel zum Halt der in sie eingebrachten Münzen 15 oder Parkchips auf. Als Haltemittel sind dabei Vorsprünge 16 vorgesehen, welche die eingebrachten Münzen 15 oder Chips hintergreifen. Die Vorsprünge 16 sind im Eingangsbereich der jeweiligen Aufnahmen 14 angeordnet und sind federelastisch ausgebildet, so dass die Münzen 15 eingeschoben werden können, dann aber nicht mehr alleine, also ohne zusätzlichen Kraftaufwand, herausfallen können.

Um möglichst viele Münzen 15 und/oder Parkchips in den Aufnahmen 14 unterbringen zu können, sind die einzelnen Aufnahmen 14 langgestreckt ausgebildet.

Die Aufnahmen 14 erstrecken sich sogar im wesentlichen über die gesamte Länge der Rückwand 4. Die einzelnen Aufnahmen 14 sind außerdem parallel zueinander angeordnet, womit der zur Verfügung stehende Platz optimal ausgenutzt wird.

Die Aufnahmen 14 sind zumindest bereichsweise von einer Deckplatte 17 abgedeckt. Die Deckplatte 17 dient zum einen als Schutz vor einer Verschmutzung der Aufnahmen 14 als auch als Schutz vor einem Herausfallen der eingelegten Münzen 15. Zum anderen stellt die Deckplatte 17 eine relativ große Werbefläche zur Verfügung.

Bei der Ausführungsvariante gemäß Figur 4 ist die Deckplatte 17 transparent ausgebildet, so dass stets die Anzahl der in den Aufnahmen 14 befindlichen Münzen 15 gesehen werden kann.

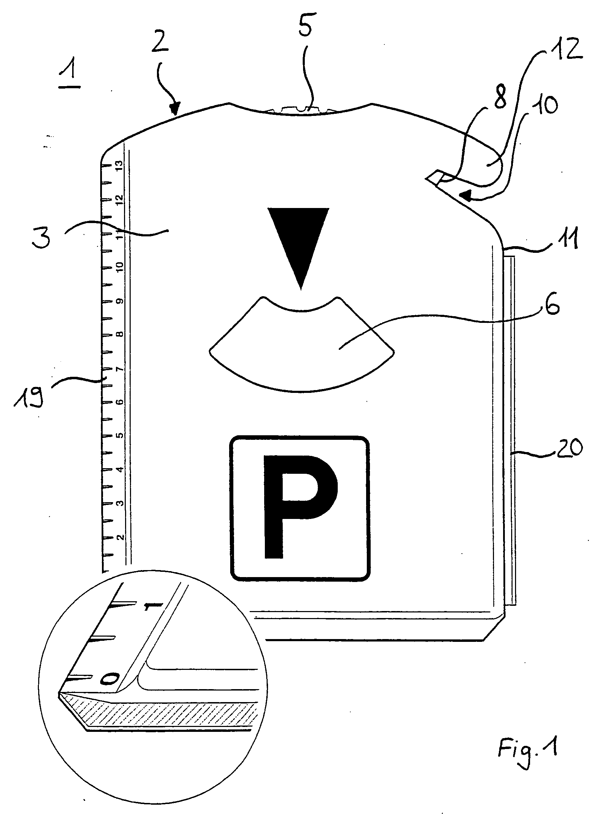

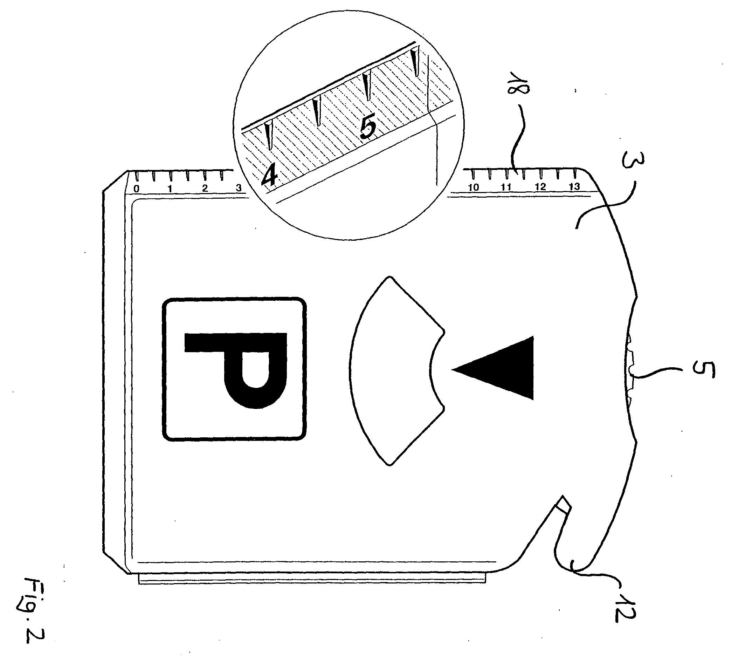

Die Vorrichtung 1 weist ferner an einer Kante einen Eiskratzbereich 18 auf, der bei der Vorrichtung gemäß Figur 2 mit einem Lineal 19 kombiniert ist. In Figur 1 ist das Lineal 19 ohne Eiskratzbereich ausgeführt. An einer anderen Kante der Vorrichtung 1 ist eine Wischlippe 20 vorgesehen.

## Patentansprüche

1. Vorrichtung zur Einstellung der Parkzeit mit einem Gehäuse (2), das eine Vorder- (3) und eine Rückwand (4) aufweist, zwischen denen eine mit den Stunden des Tages versehene Scheibe (5) drehbar angeordnet ist, wobei ein Bereich der Scheibe (5) durch ein Fenster (6) in der Vorderwand (3) sichtbar ist,
**dadurch gekennzeichnet, dass**
die Vorrichtung (1) ein Schneidewerkzeug aufweist.

2. Vorrichtung nach Anspruch 1,
**dadurch gekennzeichnet, dass**
als Schneidewerkzeug ein Gurtschneider (7) vorgesehen ist.

3. Vorrichtung nach einem der Ansprüche 1 oder 2,
**dadurch gekennzeichnet, dass**
der Gurtschneider (7) zwischen der Rückwand (4) und einer darauf positionierten Deckplatte (17) angeordnet ist.

4. Vorrichtung nach einem der vorhergehenden Ansprüche,
**dadurch gekennzeichnet, dass**
die Schneide (8) des Schneidewerkzeugs in einer randseitigen Ausnehmung (10) des Gehäuses (2) angeordnet ist.

5. Vorrichtung nach einem der vorhergehenden Ansprüche,
**dadurch gekennzeichnet, dass**
die Schneide (8) von der Außenkante (11) des Gehäuses (2) zurückversetzt ist.

6. Vorrichtung nach einem der vorhergehenden Ansprüche,
**dadurch gekennzeichnet, dass**
das Schneidewerkzeug bzw. die Schneide (8) in einem Eckbereich der Vorrichtung (1) angeordnet ist.

7. Vorrichtung nach einem der vorhergehenden Ansprüche,
**dadurch gekennzeichnet, dass**
der zumindest auf einer Seite der Schneide (8) angrenzende Bereich des Gehäuses (2) als Vorsprung (16) ausgebildet ist.

8. Vorrichtung nach einem der vorhergehenden Ansprüche,
**dadurch gekennzeichnet, dass**
ein Hammer (13) zum Zerschlagen einer Scheibe (5) vorgesehen ist.

9. Vorrichtung nach Anspruch 8,
**dadurch gekennzeichnet, dass**
der Hammer (13) auf dem Vorsprung (12) vorgesehen ist.

10. Vorrichtung nach einem der Ansprüche 8 oder 9,
**dadurch gekennzeichnet, dass**
der Hammer (13) auf den Vorsprung (12) aufsteckbar ist.

11. Vorrichtung nach einem der vorhergehenden Ansprüche 8 -10,
**dadurch gekennzeichnet, dass**
zumindest der vordere Bereich des Hammers (13) aus Hartmetall besteht.

12. Vorrichtung nach einem der vorhergehenden Ansprüche,
**dadurch gekennzeichnet, dass**
in der Rückwand (4) mindestens eine Aufnahme (14) für Münzen (15) und/oder Parkchips vorgesehen ist.

13. Vorrichtung nach Anspruch 12,
**dadurch gekennzeichnet, dass**
die Aufnahmen (14) als Ausnehmungen oder Öffnungen der Rückwand (4) ausgebildet sind.

14. Vorrichtung nach einem der Ansprüche 12 oder 13,
**dadurch gekennzeichnet, dass**
in die jeweilige Aufnahme (14) eine Mehrzahl von Münzen (15) eines bestimmten Durchmessers einbringbar ist.

15. Vorrichtung nach einem der Ansprüche 12 - 14,
**dadurch gekennzeichnet, dass**
die Aufnahmen (14) Mittel zum Halt der in sie eingebrachten Münzchips, Münzen (15) oder Parkchips aufweisen.

16. Vorrichtung nach Anspruch 15,
**dadurch gekennzeichnet, dass**
als Haltemittel Vorsprünge (16) vorgesehen sind, welche die eingebrachten Münzen (15) oder Chips übergreifen.

17. Vorrichtung nach einem der Ansprüche 12 -16,
**dadurch gekennzeichnet, dass**
die Aufnahmen (14) langgestreckt ausgebildet sind.

18. Vorrichtung nach einem der Ansprüche 12 - 17,
**dadurch gekennzeichnet, dass**
die einzelnen Aufnahmen (14) parallel zueinander angeordnet sind.

19. Vorrichtung nach einem der Ansprüche 12 - 18,
**dadurch gekennzeichnet, dass**
sich die Aufnahmen (14) im wesentlichen über die gesamte Länge oder Breite der Rückwand (4) erstrecken.

20. Vorrichtung nach einem der Ansprüche 12 - 19,
**dadurch gekennzeichnet, dass**
die Aufnahmen (14) zumindest bereichsweise von der Deckplatte (17) abgedeckt sind.

21. Vorrichtung nach Anspruch 20,
**dadurch gekennzeichnet, dass**
die Deckplatte (17) transparent ausgebildet ist.

22. Vorrichtung nach einem der vorhergehenden Ansprüche,
**dadurch gekennzeichnet, dass**
die Vorrichtung (1) an einem Kantenbereich ein Metermaß oder ein Lineal (19) aufweist.
